# EUROPÄISCHE PATENTSCHRIFT

(11) **EP 1 498 218 B1**
(45) Veröffentlichungstag und Bekanntmachung des Hinweises auf die Patenterteilung: **28.05.2008**
(21) Anmeldenummer: 04450144.3
(22) Anmeldetag: 14.07.2004
(51) Int. Cl.: B23P 11/00, B23P 15/00, F16C 11/04, B21K 25/00, F16B 17/00, B60S 1/34

(54) **Verfahren zur Herstellung eines Leichtbau-Funktionsteils und Leichtbau-Funktionsteil**
Method of manufacturing a functional part of lightweight construction and functional part of lightweight construction
Procédé de fabrication d'un élément fonctionnel à construction légère et élément fonctionnel à construction légère

(30) Priorität: 17.07.2003 AT 11242003
(43) Veröffentlichungstag der Anmeldung: 19.01.2005
(73) Patentinhaber: DGS Druckguss Systeme AG, 9015 St. Gallen (CH)
(72) Erfinder: Pichlbauer, Peter, 9015 St. Gallen (CH); Schober, Michael, 9015 St. Gallen (CH)
(74) Vertreter: Babeluk, Michael

(56) Entgegenhaltungen:
- WO-A-82/01920
- DE-A1- 3 939 530
- DE-A1- 4 033 216
- DE-A1- 19 731 305
- US-A- 3 734 697
- US-A- 4 750 851
- US-B1- 6 357 955
- US-B1- 6 564 420

## Beschreibung

Die vorliegende Erfindung betrifft ein Verfahren gemäß dem Oberbegriff von Patentanspruch 1 und einen Leichtbau-Funktionsteil gemäß dem Oberbegriff von Patentanspruch 6.

Automobilbau werden in wachsendem Umfang Leichtbaufunktionsteile eingesetzt, um das Fahrzeuggewicht zu verringern. Dabei handelt es sich allgemein um Bauteile, die mechanische Belastungen übertragen oder aufnehmen sollen, wie beispielsweise eine Halterung für einen Handbremshebel, einen tragenden Bauteil eines Fahrzeugsitzes oder ein Gehäuse für eine Kühlmittelpumpe. Die Fertigung solcher Bauteile im Aluminium- oder Magnesiumdruckgussverfahren ermöglicht es, eine beträchtliche Gewichtsreduktion bei vorbestimmten Festigkeitseigenschaften zu erreichen. Aufgrund der spezifischen Materialeigenschaften dieser Aluminium- oder Magnesiumbauteile ist es jedoch erforderlich, besonderes Augenmerk auf die Abschnitte zu richten, in denen hohe Belastungen eingeleitet werden, wie dies beispielsweise dort der Fall ist, wo größere Kräfte eingeleitet werden, wie etwa an den Stellen, an denen weitere Bauteile, wie etwa Hebel, beweglich oder starr am Funktionsteil angebracht werden. Hier ist es die Aufgabe des Konstrukteurs, die Kräfte so in den Bauteil einzuleiten, dass die zulässigen Spannungen nicht überschritten werden. Ein weiterer wichtiger Aspekt bei der Konstruktion solcher Bauteile ist ein möglichst einfacher Aufbau, der eine kostengünstige Herstellung in großen Stückzahlen ermöglicht.

Es ist bekannt, an Bauteilen Lagerteile vorzusehen, die zur Befestigung oder Lagerung weiterer Bauteile dienen. Aus der DE 40 33 216 A ist eine Schwenklagerverbindung für eine Antriebsvorrichtung bekannt, die in der Form eines Niets ausgebildet ist, der mehrere Bauteile verbindet und der einen Kugelbolzen trägt. Damit ist zwar eine günstige Krafteinleitung möglich, die Herstellung einer solchen Verbindung erfordert jedoch gebohrte Öffnungen, so dass im Fall von Gussteilen eine einfache und kostengünstige Herstellung nicht möglich ist.

Weiters sind Niete bekannt, die einen teilweise verzahnten Schaftbereich aufweisen, um eine Sicherung gegen Herausfallen zu erreichen. Beispiele solcher Niete sind in der US 6,357,955 A, der EP 0 857 843 A, der US 3,390,419 A, der US 5,577,295 A oder der GB 2 134 859 A beschrieben. Bei diesen Lösungen handelt es sich um Niete, die für Bauteile aus Stahl oder aus Kunststoff vorgesehen sind. Verbindungen dieser Art sind nicht ohne weiteres für Leichtmetallbauteile verwendbar.

Weiters ist aus der US 6,564,420 B ein Scheibenwischerarm bekannt, der eine konische Öffnung aufweist, die auf einen Lagerteil mit einer konischen Umfangsfläche mit einer Verzahnung aufgepresst wird, um ein Drehmoment zu übertragen. Die Einbringung eines weiteren Bauteiles an dieser Stelle ist nicht vorgesehen. Die US 6,564,420 B bildet den nächstliegenden Stand der Technik.

Aufgabe der vorliegenden Erfindung ist es, ein Verfahren zur Herstellung eines solchen Leichtbaufunktionsteiles anzugeben, das einfach durchführbar ist, und das eine mechanisch optimale Ausbildung insbesondere im Bereich von Lagerstellen oder Verbindungsstellen mit anderen Bauteilen ermöglicht. Eine weitere Aufgabe der Erfindung ist es, einen solchen Leichtbaufunktionsteil zu schaffen.

Erfindungsgemäß werden diese Aufgaben durch die Merkmale von Patentansprüchen 1 und 6 gelöst. Vorteilhafte Ausgestaltungen ergeben sich aus den jeweiligen Unteransprüchen. Ein wichtiger Aspekt der Erfindung ist es, dass durch das Verfahren in einfacher Weise eine robuste Anbindung weiterer Bauteile möglich ist. Durch die konische Ausbildung der Ausnehmung wird auch bei Auftreten von Produktionstoleranzen eine sicher Verbindung gewährleistet. Insbesondere kann jegliche Nachbearbeitung der Ausnehmung oder der Durchgangsöffnung entfallen, und die Positionierung des Lagerteils beim Einpressen ist unproblematisch, wenn der Lagerteil beim Einpressen in Bezug auf den Grundkörper radial beschränkt beweglich gehalten wird. Die Führung des Lagerteils erfolgt dabei durch die Selbstzentrierung bei der Axialbewegung in der konischen Öffnung. Es ist so möglich, dass das Einführen des Lagerteils anfänglich mit Spiel erfolgt und dass der Lagerteil erst während des Einführens mit der Umfangsfläche der Ausnehmung in Eingriff kommt.

Eine mechanisch besonders begünstigte Ausführung kann erreicht werden, wenn das Einpressen so lange erfolgt, bis eine erste Stirnfläche des Lagerteils an der Grundfläche der Ausnehmung aufliegt. Dadurch ist auch die Steuerung des Einpressvorgangs sehr vereinfacht, da bis zum Anschlag eingepresst wird.

Erfindungsgemäß wird der Lagerteil in der Durchgangsöffnung - beispielsweise durch Taumelnieten - fixiert, wobei der weitere Bauteil in eine Freistellung der Durchgangsöffnung ragt und dadurch frei beweglich ist.

Die Steigung der Seitenwände der Ausnehmung liegt dabei günstigerweise in einem Bereich zwischen 10% und 15%.

Eine mechanisch besonders günstige Lösung sieht vor, dass der Lagerteil einen Zapfen aufweist, der in der Durchgangsöffnung des Grundkörpers gehalten ist. Insbesondere können Kräfte und Momente in optimaler Weise aufgenommen werden, wenn der Zapfen einen ersten Abschnitt aufweist, der in der Durchgangsöffnung des Grundkörpers mit einer Presspassung gehalten ist und wenn ein zweiter Abschnitt des Zapfens als Lagerstelle für den weiteren Bauteil dient. Erfindungsgemäß weist die axiale Durchgangsöffnung im Bereich des zweiten Abschnittes des Zapfens eine Freistellung auf.

Besonders vorteilhaft ist es, wenn die Ausnehmung einen unteren Innendurchmesser am Grund der Ausnehmung aufweist, der kleiner ist als der Außendurchmesser der zylindrischen Umfangsfläche des Lagerteils und wenn die Ausnehmung einen oberen Innendurchmesser im Bereich der Öffnung der Ausnehmung aufweist, der größer ist als der Außendurchmesser der zylindrischen Umfangsfläche des Lagerteils. Durch die geometrische Ausbildung ist es möglich, die Teile miteinander zu verbinden, auch wenn diese anfänglich nicht genau aufeinander ausgerichtet sind.

Das Auftreten unzulässig großer Spannungen im Funktionsteil kann vermieden werden, wenn die Verzahnung des Lagerteils eine Tiefe aufweist, die größer ist als die halbe Differenz zwischen dem Außendurchmesser der zylindrischen Umfangsfläche des Lagerteils und dem unteren Innendurchmesser am Grund der Ausnehmung. Auf diese Weise ist sichergestellt, dass das durch die Verzahnung verdrängte Material zumindest teilweise in die Zahnzwischenräume eindringen kann, wodurch eine formschlüssige und reibschlüssige Verbindung hergestellt wird.

Eine besonders einfache Herstellung wird dadurch erreicht, dass die Ausnehmung unbearbeitet ist, d.h. durch ein Gussverfahren hergestellt ist und jegliche Nachbearbeitung entfällt.

Eine mechanisch besonders begünstigte Lösung sieht vor, dass der Lagerteil aus einer Scheibe und einem daran angeformten Zapfen besteht, und dass die Verzahnung an der Umfangsfläche der Scheibe vorgesehen ist. Auf diese Weise können die Kräfte so in den Funktionsteil eingeleitet werden, dass nur geringe Spannungen an der Grenzfläche auftreten. Auch die an der Verzahnung auftretenden Momente können so klein gehalten werden. Insbesondere ist es günstig, wenn die Scheibe einen Außendurchmesser besitzt, der mindestens dreimal so groß ist als die Abmessung der Scheibe in Axialrichtung und wenn die Scheibe einen Außendurchmesser besitzt, der größer ist als die Abmessung des Lagerteils in Axialrichtung.

Die Herstellkosten können minimiert werden, wenn der Lagerteil kaltgepresst ist. Die Verzahnung kann so direkt hergestellt werden. Alternativ dazu kann die Verzahnung des Lagerteils durch Rändeln hergestellt sein.

In der Folge wird die Erfindung anhand der in den Figuren dargestellten Ausbildungsbeispiele näher erläutert. Es zeigen:
- Fig. 1: schematisch einen Schnitt durch einen Abschnitt eines erfindungsgemäßen Funktionsteils mit dem eingepressten Lagerteil (z.B. Niet);
- Fig. 2: ein Detail von Fig. 1 ohne Lagerteil;
- Fig. 3: eine seitliche Ansicht des Lagerteils;
- Fig. 4: eine Ansicht des Lagerteils in Axialrichtung; und
- Fig. 5: ein Detail von Fig. 3.

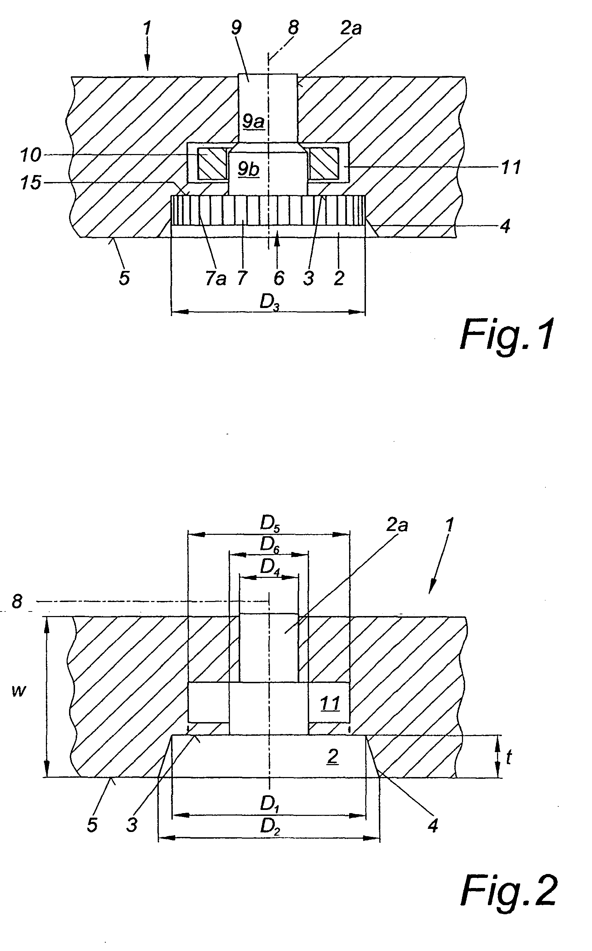

Der in Fig. 1 dargestellte Funktionsteil besitzt einen Grundkörper 1 mit einer Ausnehmung 2, die in Fig. 2 in vergrößertem Maßstab ersichtlich ist. Die Ausnehmung 2 besitzt eine ebene Grundfläche 3 und eine kegelstumpfförmige Umfangsfläche 4. Die Grundfläche 3 hat einen Durchmesser D₁, der hier als unterer Innendurchmesser bezeichnet wird. Im Bereich der Oberfläche 5 des Grundkörpers 1 besitzt die Ausnehmung 2 einen Durchmesser D₂, der hier als oberer Innendurchmesser bezeichnet wird. Die Tiefe der Ausnehmung 2 ist mit t bezeichnet. In der Richtung der Achse 8 setzt sich die Ausnehmung 2 in einer Durchgangsöffnung 2a fort, die einen deutlich kleineren Durchmesser D₄ aufweist. Die Bauteildicke w an dieser Stelle stellt die Gesamtlänge von Ausnehmung 2 und Durchgangsöffnung 2a dar.

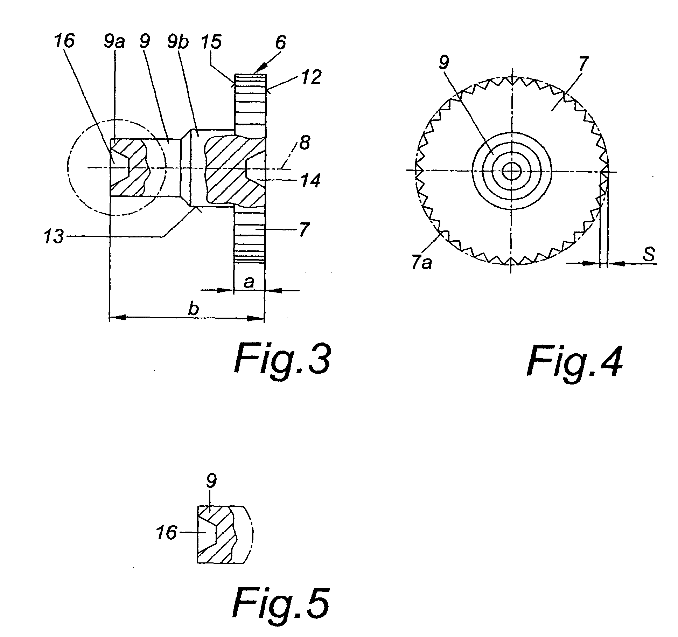

In die Ausnehmung 2 ist ein Lagerteil 6 eingepresst, der aus einer Scheibe 7 mit einem Außendurchmesser D₃ besteht, die an ihrem Umfang eine Verzahnung 7a aufweist. Die Abmessung der Scheibe 7 in Richtung der Achse 8 ist mit a bezeichnet (siehe Fig. 3). Eine erste Stirnfläche 15 des Lagerteils 6 liegt auf der Grundfläche 3 der Ausnehmung 2 auf.

Von der Scheibe 7 steht in Axialrichtung ein Zapfen 9 vor, der einen ersten Abschnitt 9a und einen zweiten Abschnitt 9b mit etwas vergrößertem Durchmesser aufweist. Der zweite Abschnitt 9b besitzt eine Lagerfläche 13, die zur Aufnahme eines weiteren, hier nur angedeuteten, Bauteils 10 dient. Der erste Abschnitt 9a ist in der Durchgangsöffnung 2a beispielsweise durch Taumelnieten fixiert. Die axiale Durchgangsöffnung 2a weist im Bereich des zweiten Abschnittes 9b des Zapfens 9 eine Freistellung 11 mit einem Durchmesser D5 auf, um dem Bauteil 10 im Lagerbereich den nötigen Bewegungsfreiraum zu geben.

Der Durchmesser D6 im Übergangsbereich zwischen der Ausnehmung 2 und der Freistellung 11 ist kleiner/gleich D5, so dass auch die strichliert angedeutete Ausführungsvariante möglich ist.

Der Lagerteil 6 wird von der Seite einer zweiten Stirnfläche 12 in die Ausnehmung 2 eingepresst, wobei eine zentrische Ausnehmung 14 in der zweiten Stirnfläche 12 zur Zentrierung dient.

Die Abmessung b des Lagerteils 6 in Richtung der Achse 8 ist kleiner als der Außendurchmesser D₃ der Scheibe 7. Die Verzahnung 7a besitzt eine Tiefe s. Im Bereich des vorderen Endes des Zapfens 9 ist eine Ausnehmung 16 vorgesehen, die dazu dient eine Nietverbindung mit dem Grundkörper 1 herzustellen.

Typische Abmessungen der einzelnen Bauteile sind:

| | |
|---|---|
| Unterer Innendurchmesser D₁: | 16,0 mm; |
| Oberer Innendurchmesser D₂: | 17,5 mm; |
| Durchmesser D₄ der Durchgangsöffnung | 9,0 mm; |
| Tiefe t der Ausnehmung 2: | 6,0 mm; |
| Durchmesser D₃ der Scheibe 7: | 17,0 mm; |
| Tiefe s der Verzahnung 7a: | 0,7 mm; |
| Abmessung a der Scheibe 7: | 5,5 mm; |
| Abmessung b des Lagerteils 6: | 15,0 mm; |

Die oben angeführten Abmessungen sind nur beispielhaft angegeben, ohne die Allgemeinheit der Erfindung zu beschränken.

## Patentansprüche

1. Verfahren zur Herstellung eines Leichtbau-Funktionsteils mit einem im Leichtmetall-Druckgussverfahren hergestellten Grundkörper (1) und einem im Grundkörper (1) angeordneten Lagerteil (6), wobei beim Gießen eine Ausnehmung (2) mit einem konischen, sich zur Öffnung hin erweiternden Querschnitt hergestellt wird, an die axial eine Durchgangsöffnung (2a) mit kleinerem Durchmesser D₄ anschließt, und wobei in die Ausnehmung (2) der Lagerteil (6), vorzugsweise ein Niet, eingepresst wird, der eine Umfangsfläche mit einer Verzahnung (7a) aufweist, so dass die Verzahnung (7a) in die Umfangsfläche (4) der Ausnehmung (2) eindringt, **dadurch gekennzeichnet, dass** ein weiterer Bauteil (10) in einer Freistellung (11) der Durchgansöffnung (2a), des Grundkörpers (1) mit dem Lagerteil (6) in Verbindung gebracht wird, um den weiteren Bauteil (10) zu lagern und dass die Umfangsfläche mit der Verzahnung (7a) im Wesentlichen zylindrisch ausgebildet ist.

2. Verfahren nach Anspruch 1, **dadurch gekennzeichnet, dass** das Einpressen so lange erfolgt, bis eine erste Stirnfläche (15) des Lagerteils (6) an der Grundfläche (3) der Ausnehmung (2) aufliegt, und dass das Einführen des Lagerteils (6) anfänglich mit Spiel erfolgt und dass der Lagerteil (6) erst während des Einführens mit der Umfangsfläche (4) der Ausnehmung (2) in Eingriff kommt.

3. Verfahren nach einem der Ansprüche 1 bis 2, **dadurch gekennzeichnet, dass** die Herstellung des Lagerteils (6) durch Kaltpressen erfolgt.

4. Verfahren nach einem der Ansprüche 1 bis 3, **dadurch gekennzeichnet, dass** der Lagerteil (6) beim Einpressen in Bezug auf den Grundkörper (1) radial beschränkt beweglich gehalten wird und beim Einpressen durch einen Dorn zentriert wird, der in einer zentrischen Ausnehmung (14) in der zweiten Stirnfläche (12) vorgesehen ist.

5. Verfahren nach einem der Ansprüche 1 bis 3, **dadurch gekennzeichnet, dass** der Lagerteil (6) in der Durchgangsöffnung (2a), beispielsweise durch Taumelnieten, fixiert wird, wobei der weitere Bauteil (10) in die Freistellung (11) der Durchgangsöffnung (2a) ragt.

6. Leichtbau-Funktionsteil mit einem im Leichtmetall-Druckgussverfahren hergestellten Grundkörper (1) und einem im Grundkörper (1) angeordneten Lagerteil (6), wobei der Grundkörper (1) mindestens eine Ausnehmung (2) mit einer sich zur Öffnung hin erweiternden, im Wesentlichen kegelstumpfförmigen Umfangsfläche (4) aufweist, an die axial eine Durchgangsöffnung (2a) mit kleinerem Durchmesser D₄ anschließt, und wobei der Lagerteil (6), vorzugsweise ein Niet, eine Umfangsfläche mit einer Verzahnung (7a) aufweist, und dass die zylindrische Umfangsfläche des Lagerteils (6) in die kegelstumpfförmige Umfangsfläche (4) der Ausnehmung (2) des Grundkörpers (1) eingepresst ist, **dadurch gekennzeichnet, dass** die axiale Durchgangsöffnung (2a) des Grundkörpers (1) eine Freistellung (11) zur Aufnahme eines in Verbindung mit dem Lagerteil weiteren Bauteils (10) aufweist und dass die Umfangsfläche mit der Verzahnung (7a) im Wesentlichen zylindrisch ausgebildet ist.

7. Leichtbau-Funktionsteil nach Anspruch 6, **dadurch gekennzeichnet, dass** der Lagerteil (6) einen Zapfen (9) aufweist, in der Durchgangsöffnung (2a) des Grundkörpers (1) gehalten ist, und dass der Zapfen (9) vorzugsweise einen ersten Abschnitt (9a) aufweist, der in der Durchgangsöffnung (2a) des Grundkörpers (1) mit einer Presspassung gehalten ist und dass ein zweiter Abschnitt (9b) des Zapfens (9) als Lagerstelle für den weiteren Bauteil (10) dient.

8. Leichtbau-Funktionsteil nach einem der Ansprüche 6 oder 7, **dadurch gekennzeichnet, dass** die Ausnehmung (2) einen unteren Innendurchmesser D₁ am Grund der Ausnehmung (2) aufweist, der kleiner ist als der Außendurchmesser D₃ der zylindrischen Umfangsfläche des Lagerteils (6) und dass die Ausnehmung (2) einen oberen Innendurchmesser D₂ im Bereich der Öffnung der Ausnehmung (2) aufweist, der größer ist als der Außendurchmesser D₃ der zylindrischen Umfangsfläche des Lagerteils (6).

9. Leichtbau-Funktionsteil nach Anspruch 8, **dadurch gekennzeichnet, dass** die Verzahnung des Lagerteils (6) eine Tiefe s aufweist, die größer ist als die halbe Differenz zwischen dem Außendurchmesser D₃ der zylindrischen Umfangsfläche (7) des Lagerteils (6) und dem unteren Innendurchmesser D₁ am Grund der Ausnehmung (2).

10. Leichtbau-Funktionsteil nach einem der Ansprüche 6 bis 9, **dadurch gekennzeichnet, dass** der Lagerteil (6) aus einer Scheibe (7) und einem daran angeformten Zapfen (9) besteht, und dass die Verzahnung (7a) an der Umfangsfläche der Scheibe (7) vorgesehen ist, und dass der Lagerteil (6) eine erste Stirnfläche (15) aufweist, die auf einer Grundfläche (3) der Ausnehmung (2) aufliegt.

11. Leichtbau-Funktionsteil nach Anspruch 10, **dadurch gekennzeichnet, dass** die Scheibe (7) einen Außendurchmesser D₃ besitzt, der mindestens dreimal so groß ist als die Abmessung a der Scheibe (7) in Axialrichtung und der vorzugsweise größer ist als die Abmessung b des Lagerteils (6) in Axialrichtung.

12. Leichtbau-Funktionsteil nach einem der Ansprüche 6 bis 11, **dadurch gekennzeichnet, dass** der Lagerteil (6) kaltgepresst ist.

13. Leichtbau-Funktionsteil nach einem der Ansprüche 6 bis 12, **dadurch gekennzeichnet, dass** am Ende des Zapfens (9) eine weitere zentrische Ausnehmung (11) vorgesehen ist, die zur Herstellung einer formschlüssigen Verbindung mit dem weiteren Bauteil (10) vorgesehen ist.

## Claims

1. Method for producing a light-weight functional part with a main body (1) manufactured by a light-metal pressure casting process and a bearing part (6) positioned in the main body (1), where a conical recess (2) is formed in the casting process, whose cross-section increases towards the opening, a through-hole (2a) with smaller diameter D₄ being axially adjacent thereto, and where the bearing part (6), preferably a rivet, is pressed into the recess (2), said bearing part (2) having a serration (7a) along its circumference, which serration (7a) meshes with the wall surface (4) of the recess (2), **characterised in that** a further part (10) is borne by the bearing part (6) in a widened space (11) of the through-hole (2a) in the main body (1), and that the circumferential surface carrying the serration (7a) is essentially cylindrical.

2. Method according to claim 1, **characterised in that** the bearing part (6) is pressed into the main body (1) until a first front face (15) of the bearing part (6) meets the bottom face (3) of the recess (2), and that during insertion the bearing part (6) initially fits loosely and meshes with the wall surface (4) of the recess (2) only in the course of the insertion process.

3. Method according to any of claims 1 to 2, **characterised in that** the bearing part (6) is manufactured by cold pressing.

4. Method according to any of claims 1 to 3, **characterised in that** the bearing part (6) is radially movable relative to the main body (1) in a limited way during the pressing-in operation and is centered during pressing-in by means of a mandrel engaging in a centered recess (14) of the second front face (12).

5. Method according to any of claims 1 to 3, **characterised in that** the bearing part (6) is fixed in the through-hole (2a), for instance by wobble riveting, the further part (10) extending into the widened space (11) of the through-hole (2a).

6. Light-weight functional part with a main body (1) manufactured by a light-metal pressure casting process, and a bearing part (6) positioned in the main body (1), where the main body (1) has at least one recess (2), the cross-section of whose conical wall surface (4) increases towards the opening, a through-hole (2a) with smaller diameter D₄ being axially adjacent thereto, and where the bearing part (6), preferably a rivet, has a circum-ferential surface provided with a serration (7a), and where the cylindrical circumferential surface of the bearing part (6) is pressed into the conical wall surface (4) of the recess (2) of the main body (1), **characterised in that** the axial through-hole (2a) of the main body (1) has a widened space (11) for receiving a further part (10) in connection with the bearing part, and that the circumferential surface carrying the serration (7a) is essentially cylindrical.

7. Light-weight functional part according to claim 6, **characterised in that** the bearing part (6) has a journal (9) held in the through-hole (2a) of the main body (1), and that the journal (9) preferably has a first section (9a), which is held in a press fit in the through-hole (2a) of the main body (1), and that a second section (9b) of the journal (9) acts as a bearing for the further part (10).

8. Light-weight functional part according to any of claims 6 or 7, **characterised in that** the recess (2) has at its bottom a lower inner diameter D₁, which is smaller than the outer diameter D₃ of the cylindrical circumferential surface of the bearing part (6), and that the recess (2) has an upper innner diameter D₂ at the opening of the recess (2), which is greater than the outer diameter D₃ of the circumferential surface of the bearing part (6).

9. Light-weight functional part according to claim 8, **characterised in that** the serration of the bearing part (6) has a depth s, which is greater than half the difference between the outer diameter D₃ of the circumferential surface (7) of the bearing part (6) and the lower inner diameter D₁ at the bottom of the recess (2).

10. Light-weight functional part according to any of claims 6 to 9, **characterised in that** the bearing part (6) consists of a disk (7) and a journal (9) formed integral with the disk, and that the serration (7a) is provided at the circumferential surface of the disk (7), and that the bearing part (6) has a first front face (15), which rests against the bottom face (3) of the recess (2).

11. Light-weight functional part according to claim 10, **characterised in that** the disk (7) has an outer diameter D₃, which is at least three times as great as the axial dimension a of said disk (7) and which is preferably greater than the dimension b of the bearing part (6) in axial direction.

12. Light-weight functional part according to any of claims 6 to 11, **characterised in that** the bearing part (6) is made by cold pressing.

13. Light-weight functional part according to any of claims 6 to 12, **characterised in that** at the end of the journal (9) a further centered recess (11) is provided, which will serve to establish a positive locking connection with the further part (10).

## Revendications

1. Procédé de fabrication d'une pièce fonctionnelle, en construction légère, ayant un corps de base (1) fabriqué par un procédé d'injection sous pression de métal léger et une pièce de palier (6) dans le corps de base (1), selon lequel
lors de la coulée on réalise une cavité (2) ayant une section conique allant en s'élargissant vers l'ouverture et se poursuivant axialement par un orifice traversant (2a) de diamètre (D₄) plus petit et
la cavité (2) de la partie de palier (6) comporte de préférence un rivet, enfoncé de force, ayant une surface périphérique avec une denture (7a) qui pénètre dans la surface périphérique (4) de la cavité (2),
**caractérisé en ce qu'**
un autre composant (10) est mis en liaison avec la partie de palier (6) dans un dégagement (11) de l'orifice traversant (2a) du corps de base (1) avec la partie formant palier (6), pour recevoir l'autre composant (10) et la surface périphérique de la denture (7a) est pratiquement cylindrique.

2. Procédé selon la revendication 1,
**caractérisé en ce que**
l'enfoncement de force se fait jusqu'à ce qu'une première surface frontale (15) de la pièce de palier (6) s'appuie contre la surface de base (3) de la cavité (2) et
l'introduction de la pièce de palier (6) se fait initialement avec du jeu et la pièce de palier (6) vient en prise avec la surface périphérique (4) de la cavité (2) seulement pendant l'introduction.

3. Procédé selon l'une des revendications 1 et 2,
**caractérisé en ce que**
la fabrication de la pièce de palier (6) se fait par une opération de pressage à froid.

4. Procédé selon l'une des revendications 1 à 3,
**caractérisé en ce que**
lors du pressage la pièce de palier (6) est tenue de manière mobile, limitée radialement par rapport au corps de base (1) et lorsqu'on comprime, elle est centrée par une broche qui vient dans la cavité centrale (14) de la seconde face frontale (12).

5. Procédé selon l'une des revendications 1 à 3,
**caractérisé en ce que**
la pièce de palier (6) est fixée dans l'orifice traversant (2a) par exemple par des rivets de nutation et l'autre pièce (10) pénètre dans le dégagement (11) de l'orifice traversant (2a).

6. Pièce fonctionnelle en construction légère ayant un corps de base (1) fabriqué par un procédé d'injection sous pression de métal léger et une pièce de palier (6) installée dans le corps de base (1),
le corps de base (1) ayant au moins une cavité (2) avec une surface périphérique (4) pratiquement en forme de tronc de cône s'élargissant en direction de l'ouverture, et se poursuivant axialement par un orifice traversant (2a) de diamètre (D₄) plus petit et
la pièce de palier (6) comporte de préférence un rivet dont la surface périphérique est munie d'une denture (7a) et
la surface périphérique cylindrique de la pièce de palier (6) est enfoncée de force dans la surface périphérique (4) en forme de tronc de cône de la cavité (2) du corps de base (1),
**caractérisée en ce que**
l'orifice traversant axial (2a) du corps de base (1) comporte un dégagement (11) pour recevoir un autre composant (10) en liaison avec la pièce de palier, et
la surface périphérique a pratiquement une forme cylindrique avec la denture (7a).

7. Pièce fonctionnelle en construction légère selon la revendication 6,
**caractérisée en ce que**
la pièce de palier (6) comporte un goujon (9) tenu dans l'orifice traversant (2a) du corps de base (1) et
le goujon (9) comporte de préférence un premier segment (9a) tenu par un ajustage pressé dans l'orifice traversant (2a) du corps de base (1) et
un second segment (9b) du goujon (9) sert de palier pour l'autre composant (10).

8. Pièce fonctionnelle en construction légère selon l'une des revendications 6 ou 7,
**caractérisée en ce que**
la cavité (2) a un diamètre intérieur, inférieur, (D₁) au fond de la cavité (2) qui est inférieur du diamètre extérieur (D₃) de la surface périphérique cylindrique de la pièce de palier (6) et
la cavité (2) a un diamètre intérieur, supérieur, (D₂) au niveau de l'orifice de la cavité (2) et supérieur au diamètre extérieur (D₃) de la surface périphérique cylindrique de la pièce de palier (6).

9. Pièce fonctionnelle en construction légère selon la revendication 8,
**caractérisée en ce que**
la denture de la pièce de palier (6) a une profondeur (s) supérieure à la demi-différence entre le diamètre extérieur (D₃) de la surface périphérique cylindrique (7) de la pièce de palier (6) et le diamètre intérieur inférieur (D₁) au fond de la cavité (2).

10. Pièce fonctionnelle en construction légère selon l'une des revendications 6 à 9,
**caractérisée en ce que**
la pièce de palier (6) se compose d'un disque (7) et d'un téton (9) formé sur celui-ci et
la denture (7a) est prévue sur la surface périphérique du disque (7) et
la pièce de palier (6) a une première surface frontale (5) qui s'appuie sur une surface de base (3) de la cavité (2).

11. Pièce fonctionnelle en construction légère selon la revendication 10,
**caractérisée en ce que**
le disque (7) a un diamètre extérieur (D3) qui est au moins trois fois aussi grand que la dimension (a) du disque (7) dans la direction axiale et de préférence il est supérieur à la dimension (b) de la pièce de palier (6) dans la direction axiale.

12. Pièce fonctionnelle en construction légère selon l'une des revendications 6 à 11,
**caractérisée en ce que**
la pièce de palier (6) est pressée à froid.

13. Pièce fonctionnelle en construction légère selon l'une des revendications 6 à 12,
**caractérisée en ce qu'**
à l'extrémité du téton (9) il est prévu une auxtre cavité centrale (11) servant à la réalisation d'une liaison par la forme avec l'autre pièce de palier (10).
